# EUROPÄISCHE PATENTANMELDUNG

(11) **EP 3 098 028 A1**
(43) Veröffentlichungstag der Anmeldung: **30.11.2016**
(21) Anmeldenummer: 15169115.1
(22) Anmeldetag: 26.05.2015
(51) Int. Cl.: B25D 17/20, B25D 17/26, B25F 5/00, F16H 57/027, F16K 15/14, F16K 17/18

(54) **HANDWERKZEUGGETRIEBEVERSCHLUSS UND HANDWERKZEUGMASCHINE**

(71) Anmelder: HILTI Aktiengesellschaft, 9494 Schaan (LI)
(72) Erfinder: Ohlendorf, Oliver, 86899 Landsberg (DE)
(74) Vertreter: Hilti Aktiengesellschaft Corporate Intellectual Property

(57) **Zusammenfassung**

Handwerkzeuggetriebeverschluss (10) mit einem Grundkörper (1) zum Verschließen einer Getriebegehäuseöffnung (70) eines Getriebegehäuses (80) einer Handwerkzeugmaschine (100), insbesondere eines Bohrhammers oder Kombihammers, wobei der Handwerkzeuggetriebeverschluss (10) einen Luftkanal (L) aufweist, durch den eine Luftmasse (LM) in das und aus dem Getriebegehäuse (80) strömen kann, wobei der Handwerkzeuggetriebeverschluss (10) eine im Luftkanal (L) angeordnete oleophobe Membran (9) aufweist, die luftdurchlässig und getriebeöldicht ist und als Druckausgleichselement und Abdichtelement wirkt.

## Beschreibung

Die vorliegende Erfindung betrifft einen Handwerkzeuggetriebeverschluss mit einem Grundkörper zum Verschließen einer Getriebegehäuseöffnung eines Getriebegehäuses einer Handwerkzeugmaschine, insbesondere eines Bohrhammers oder Kombihammers, wobei der Handwerkzeuggetriebeverschluss einen Luftkanal aufweist, durch den eine Luftmasse in das und aus dem Getriebegehäuse strömen kann. Die vorliegende Erfindung betrifft ebenfalls eine Handwerkzeugmaschine mit einem Handwerkzeuggetriebeverschluss.

Innerhalb des Getriebegehäuses einer typischen Handwerkzeugmaschine kann ein Schlagwerk mit einem Kolben, Pleuel, sowie einem Döpper angeordnet sein. Diese werden durch ein in dem Getriebegehäuse befindliches Schmiermittel, beispielsweise ein Getriebeöl, geschmiert, um möglichst reibungsarm zusammenzuwirken. Typischerweise wird das Schmiermittel über die Getriebegehäuseöffnung in das Getriebegehäuse eingebracht. Um zu vermeiden, dass das Schmiermittel aus dem Getriebegehäuse austritt, wird die Getriebegehäuseöffnung durch einen Grundkörper eines Handwerkzeuggetriebeverschlusses verschlossen. Der Grundkörper kann als Stopfen ausgebildet sein.

Es ist Aufgabe der vorliegenden Erfindung, einen verbesserten Handwerkzeuggetriebeverschluss bereitzustellen, der eine erhöhte Lebensdauer einer Handwerkzeugmaschine begünstigt. Ebenfalls ist es Aufgabe der vorliegenden Erfindung, eine Handwerkzeugmaschine mit einem derart verbesserten Handwerkzeuggetriebeverschluss bereitzustellen.

Bezüglich des Handwerkzeuggetriebeverschlusses wird die Aufgabe dadurch gelöst, dass der Handwerkzeuggetriebeverschluss eine im Luftkanal angeordnete oleophobe Membran aufweist, die luftdurchlässig und getriebeöldicht ist und als Druckausgleichselement und Abdichtelement wirkt.

Vorteilhafterweise kann nun Luft, die aufgrund des Werkzeugmaschinenbetriebs und speziell durch Erhitzung des im Getriebegehäuse befindlichen Schmiermittels expandiert wird, aus dem Getriebegehäuse durch die oleophobe Membran entweichen. Gleichsam kann ein Unterdruck im Getriebegehäuse durch die oleophobe Membran hindurch ausgeglichen werden.

Die Erfindung schließt die Erkenntnis ein, dass durch die geschlossene Bauweise eines Getriebegehäuses und dessen Verschließen mittels eines Grundkörpers in Form eines geschlossenen Stopfens, der Innendruck eines Getriebegehäuses während des Betriebs der Werkzeugmaschine auf ein unerwünscht hohes Druckniveau steigt. Ein hohes Druckniveau ist der Lebensdauer und insbesondere auch den Arbeitsleistungsdaten, zum Beispiel der abgegebenen Schlagenergie der Handwerkzeugmaschine abträglich. Der erfindungsgemäße Handwerkzeugverschluss trägt zu einer Beseitigung dieser Nachteile bei in dem die oleophobe Membran zum einen als Druckausgleichselement wirkt, d.h. Luft zwecks Druckausgleich in beiden Richtungen durch die oleophobe Membran hindurchtreten kann. Zum anderen begünstigt die oleophobe Membran, dass ein Schmiermittel, insbesondere Öl, nicht aus dem Getriebegehäuse austreten kann, und somit sowohl die Schmierleistung erhalten bleibt als auch die für den Anwender sichtbare Oberfläche der Werkzeugmaschine verschmutzungsfrei verbleibt.

Es hat sich als vorteilhaft herausgestellt, wenn der Handwerkzeuggetriebeverschluss ein Deckelteil mit Lüftungsöffnungen aufweist und die oleophobe Membran durch das Deckelteil gegen den Grundkörper gehalten ist. Am Grundkörper kann eine umlaufende Nut ausgebildet sein, auf der die oleophobe Membran gelagert ist. Am Deckelteil kann unterseitig eine kreisförmige Ausnehmung vorgesehen sein, so dass die oleophobe Membran nur teilweise, d.h. insbesondere nicht vollflächig am Deckelteil anliegt. Das Deckelteil kann mittels eines Klebstoffs am Grundkörper gesichert sein. Damit wird das Deckelteil, das beispielsweise aus Kunststoff bestehen kann, bei betriebstypischen Vibrationen sicher gehalten.

In einer weiteren bevorzugten Ausgestaltung weist der Handwerkzeuggetriebeverschluss ein zweites luftdurchlässiges und getriebeöldichtes Abdichtelement auf. Dieses ist bevorzugt von der oleophobe Membran beabstandet und im Luftkanal angeordnet. Es hat sich als vorteilhaft herausgestellt, wenn das zweite Abdichtelement koaxial zum Grundkörper angeordnet ist. Durch das zweite luftdurchlässige und getriebeöldichte Abdichtelement kann ein Ölaustritt aus dem Getriebegehäuse einen besonders langen Zeitraum vermieden werden.

Um einen Druckausgleich über die oleophobe Membran weiter zu verbessern, kann der Handwerkzeuggetriebeverschluss ein im Luftkanal angeordnetes bidirektionales Druckventil aufweist, über das sowohl ein im Getriebegehäuse auftretender Überdruck als auch ein im Getriebegehäuse auftretender Unterdruck abbaubar ist.

In einer bevorzugten Ausgestaltung ist das Druckventil innerhalb des Handwerkzeuggetriebeverschlusses angeordnet und kann als elastisches Schlauchelement ausgebildet sein. Besonders geht bevorzugt sowohl ein Abbau eines im Getriebegehäuse auftretenden Überdrucks als auch ein Abbau eines im Getriebegehäuse auftretenden Unterdrucks mit einer elastischen Verformung des Schlauchelements einher. Das als elastisches Schlauchelement ausgebildete Druckventil kann in vorgespanntem Zustand in den Handwerkzeuggetriebeverschluss eingebaut sein. Vorteilhafterweise besteht das als elastisches Schlauchelement ausgebildete Druckventil aus Silikon.

Besonders bevorzugt ist das elastische Schlauchelement, wenn ein Getriebeinnendruck und ein Umgebungsdruck im Wesentlichen gleich sind, an seinem inneren und äußeren Umfang jeweils nur teilweise abgestützt. Die nur teilweise Abstützung kann derart vorgesehen sein, dass für das Schlauchelement an seinem äußeren Umfang eine Außenausweichzone und an seinem inneren Umfang einen Innenausweichzone gebildet ist, bevorzugt hin zum Grundkörper und/oder Stützkörper. Besonders bevorzugt ist das Schlauchelement an seinem inneren und äußeren Umfang, bezogen auf die Oberfläche, jeweils nur zu weniger als 50 Prozent abgestützt. Stirnseitig kann das Schlauchelement, einen Teil des Luftkanals bildend, von dem Grundkörper beabstandet sein.

Besonders bevorzugt bildet der Stützkörper einen Ventilsitz für einen Überdruckausgleich und/oder der bildet der Grundkörper einen Ventilsitz für einen Unterdruckausgleich.

Die Außenausweichzone und/oder die Innenausweichzone sind bevorzugt ringförmig ausgebildet und können koaxial zum Schlauchelement angeordnet sein. In einer weiteren bevorzugten Ausgestaltung ist der Stützkörper konisch ausgebildet und definiert damit zumindest abschnittsweise die Innenausweichzone. Bevorzugt bilden die Außenausweichzone und/oder die Innenausweichzone einen Abschnitt des Luftkanals.

Das Druckventil kann derart ausgelegt sein, das es erst mit dem Überschreiten einer vorbestimmten Druckdifferenz, beispielsweise 2 Bar, zwischen Umgebungsdruck und Getriebedruck öffnet. Dies ist beispielsweise vorteilhaft, wenn die Werkzeugmaschine ein elektropneumatisches Schlagwerk aufweist für das ein Sollüberdruck wünschenswert ist.

Es hat sich als vorteilhaft herausgestellt, wenn das Abdichtelement aus Filz besteht oder wenigstens Filz aufweist. Das Abdichtelement kann aus einem dichten textilen Fasergut bestehen. Es hat sich als weiter vorteilhaft herausgestellt, wenn das Abdichtelement zumindest abschnittsweise unterhalb des Druckventils angeordnet ist, wenn sich der Handwerkzeuggetriebeverschluss in seiner bestimmungsgemäßen Einbausituation befindet.

Bevorzugt ist der Grundkörper und/oder das Deckelteil rotationssymmetrisch ausgebildet. Auf diese Art und Weise ist eine kostengünstige Fertigung auf einer Drehbank möglich. Um ein gleichmäßig verteiltes Strömen von Luft durch die Lüftungsöffnungen zu ermöglichen, sind die Lüftungsöffnungen vorzugsweise ringförmig an einer Oberfläche des Deckelteils angeordnet.

In einer weiteren bevorzugten Ausführungsform weist der Grundkörper einen wannenförmigen Abschnitt auf, der bevorzugt gegenüber dem Deckelteil angeordnet ist und weiter bevorzugt in das Getriebegehäuse hineinragt, wenn der Grundkörper die Getriebegehäuseöffnung verschließt. Der wannenförmige Abschnitt des Grundkörpers kann eine Öffnungsbohrung aufweisen, über die eine Luftmenge in den Luftkanal ein- oder austreten kann. Der wannenförmige Abschnitt des Grundkörpers kann rotationssymmetrisch ausgebildet sein. Bevorzugt ist die Öffnungsbohrung als Durchgangsbohrung entlang einer Sekante des rotationssymmetrisch ausgebildeten wannenförmigen Abschnitts des Grundkörpers ausgebildet.

In einer bevorzugten Ausgestaltung weist der Grundkörper einen Dichtring auf, der angeordnet ist, den Grundkörper umfangseitig zur Getriebegehäuseöffnung abzudichten. Bevorzugt ist der Grundkörper als Stopfen ausgebildet. Eine Stopfen-Funktion des Grundkörpers kann beispielsweise durch einen am Grundkörper vorgesehenen Dichtring bewirkt sein. Alternativ oder zusätzlich kann der Grundkörper Lamellen aufweisen, die ausgebildet sind, den Grundkörper in einer Getriebegehäuseöffnung kraftschlüssig zu halten.

Bezüglich der Handwerkzeugmaschine wird die Aufgabe dadurch gelöst, dass die Handwerkzeugmaschine einen vorbeschriebenen Handwerkzeuggetriebeverschluss aufweist. Weitere Vorteile ergeben sich aus der folgenden Figurenbeschreibung. In den Figuren sind die Ausführungsbeispiele der vorliegenden Erfindung dargestellt, die Figuren, die Beschreibung und die Ansprüche enthalten zahlreiche Merkmale und Kombinationen. Der Fachmann wird die Merkmale zweckmäßigerweise auch einzeln betrachten und zu sinnvollen weiteren Kombinationen zusammenfassen.

In den Figuren sind gleiche und gleichartige Komponenten mit gleichen Bezugszeichen beziffert.

Es zeigen:
- Fig. 1: eine schematische Darstellung eines Handwerkzeuggetriebeverschlusses in Seitenansicht;
- Fig. 2: eine schematische Darstellung eines Handwerkzeuggetriebeverschlusses mit einem Stützkörper;
- Fig. 3: eine schematische Darstellung des Handwerkzeuggetriebeverschlusses aus mit einem zweiten Abdichtelement und ohne Stützkörper;
- Fig. 4: eine schematische Darstellung des Handwerkzeuggetriebeverschlusses aus mit einem zweiten Abdichtelement und mit Stützkörper;
- Fig. 5: eine schematische Darstellung des Handwerkzeuggetriebeverschlusses aus Fig. 3 mit einem Schlauchelement;
- Fig. 6: eine schematische perspektivische Darstellung eines erfindungsgemäßen Handwerkzeuggetriebeverschlusses;
- Fig. 7: eine schematische Explosionsdarstellung des Handwerkzeuggetriebeverschlusses; und
- Fig. 8: eine Handwerkzeugmaschine mit einem Handwerkzeuggetriebeverschluss.

### Ausführungsbeispiele:

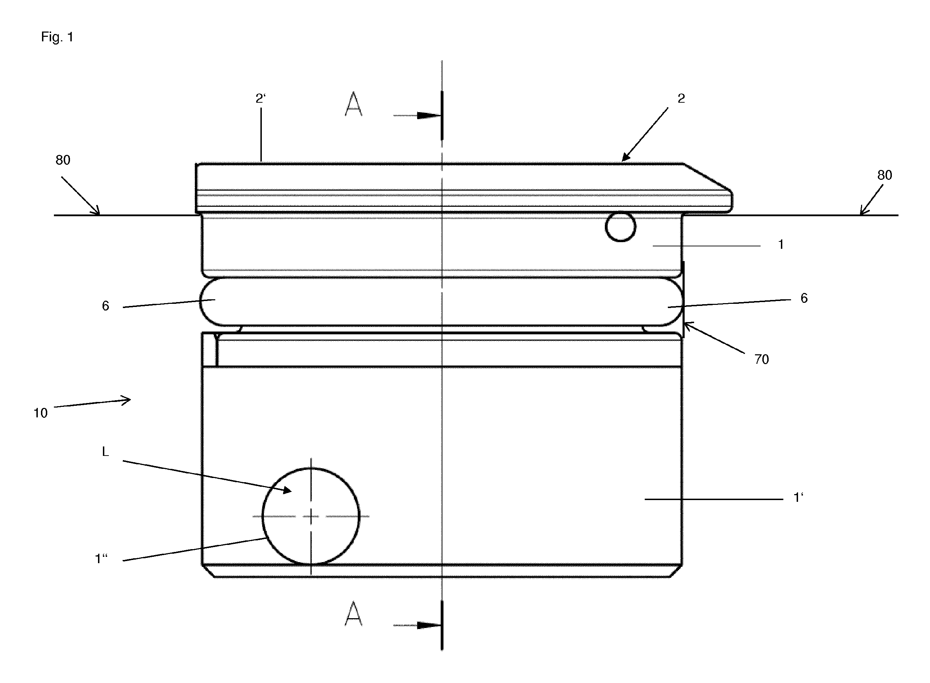

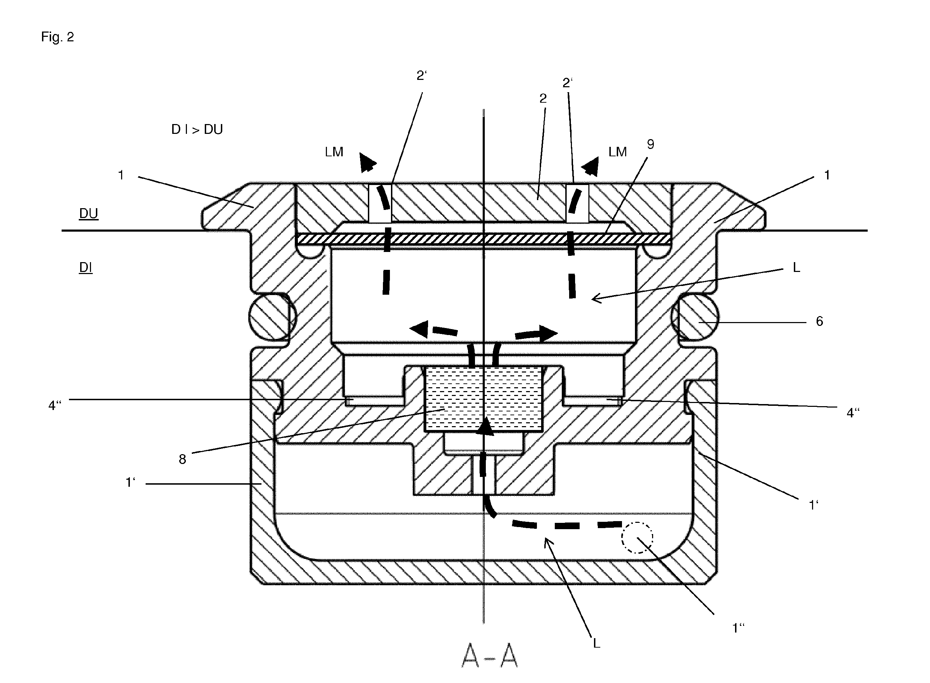

In Fig. 1 ist ein erfindungsgemäßer Handwerkzeuggetriebeverschluss 10 in Seitenansicht mit eingezeichneter Schnittlinie A-A dargestellt. Die Fig. 2 bis 5 zeigen jeweils einen Schnitt A-A durch den Handwerkzeuggetriebeverschluss 10 entsprechend der Schnittlinie A-A der Fig. 1, wobei in den Fig. 2 bis 5 jeweils andere Ausführungsbeispiele dargestellt sind.

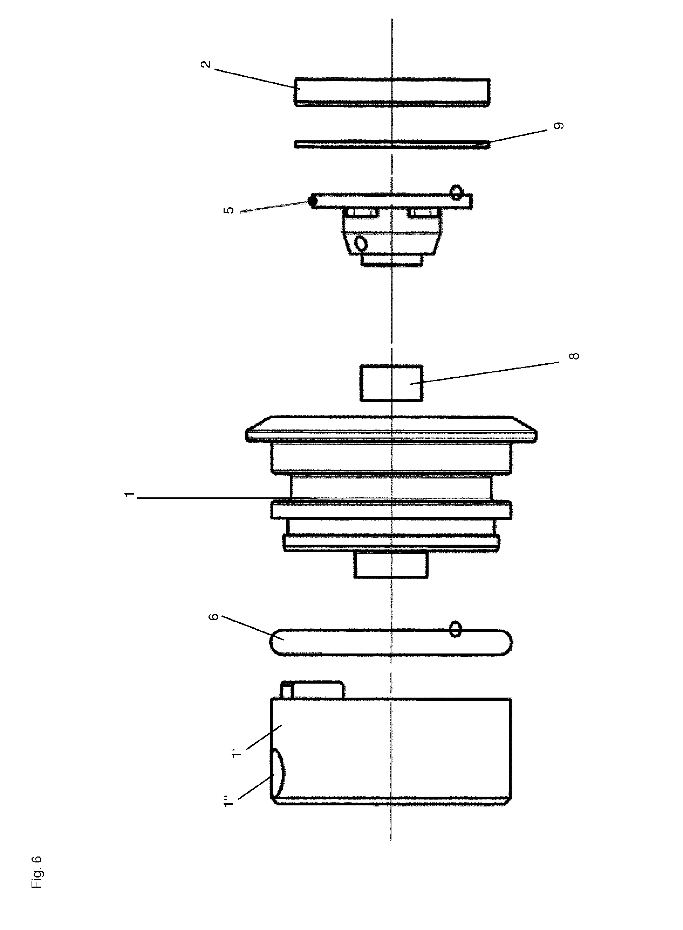

Der Handwerkzeuggetriebeverschluss 10 in Fig. 1 weist einen Grundkörper 1 zum Verschließen einer Getriebegehäuseöffnung 70 eines Getriebegehäuses 80 auf. Mittels eines umlaufenden Dichtrings 6 ist der Grundkörper 1 umfangsseitig zur Getriebegehäuseöffnung 70 hin abgedichtet. Des Weiteren weist der Handwerkzeuggetriebeverschluss 10 ein Deckelteil 2 auf, das an seiner Oberfläche eine Lüftungsöffnung 2' aufweist. In der Darstellung der Fig. 1 ist lediglich die Lage der Lüftungsöffnung 2' erkennbar. Eine Ausgestaltung der Lüftungsöffnung 2' ist beispielsweise der Fig. 6 zu entnehmen, die eine perspektivische Darstellung des erfindungsgemäßen Handwerkzeuggetriebeverschlusses 10 zeigt.

Der Handwerkzeuggetriebeverschluss 10 weist ferner einen Luftkanal L auf, durch den eine (nicht dargestellte) Luftmasse in das und aus dem Getriebegehäuse zwecks Druckausgleichs strömen kann. In Fig. 1 ist lediglich ein Abschnitt des Luftkanals L erkennbar, der durch eine Öffnungsbohrung 1" in einem wannenförmigen Abschnitt 1' des Grundkörpers 1 gebildet wird.

Erfindungsgemäß weist der Handwerkzeuggetriebeverschluss 10 der Fig. 2 eine im Luftkanal L angeordnete oleophobe Membran 9 auf, die luftdurchlässig und getriebeöldicht ist und als Druckausgleichselement und Abdichtelement wirkt. Dabei ist die oleophobe Membran 9 tellerförmig ausgebildet und koaxial zum Grundkörper 1 angeordnet.

Im Ausführungsbeispiel der Fig. 2 besteht die oleophobe Membran 9 aus Kunststoff und weist einen Porendurchmesser kleiner 25 Mikrometer auf.

Der Handwerkzeuggetriebeverschluss 10 umfasst ferner ein Deckelteil 2 mit Lüftungsöffnungen 2', wobei die oleophobe Membran 9 durch das Deckelteil 2 gegen den Grundkörper 1 gehalten ist. Das Deckelteil 2 ist bevorzugt mittels eines Klebstoffs (nicht gezeigt) am Grundkörper 1 gesichert ist.

Unterhalb der oleophoben Membran 9 ist ein vom Handwerkzeuggetriebeverschluss 10 umfasster und im Grundkörper 1 angeordneter Stützkörper 5 befindlich. Mittels des Stützkörpers 5 wird eine Auslenkung der oleophoben Membran 9 im Zuge eines Druckausgleichs beschränkt, so dass die oleophobe Membran 9 vor Beschädigungen geschützt ist.

Im Folgenden wird mit Bezug auf Fig. 2 der Luftkanal L, der sich durch den Handwerkzeuggetriebeverschluss 10 hindurch erstreckt, näher erläutert. Beginnend in der Öffnungsbohrung 1" erstreckt sich der Luftkanal L durch den wannenförmigen Abschnitt 1' des Grundkörpers 1 hindurch in Richtung des Stützkörpers 5. Von dort verzweigt sich der Luftkanal L in parallel geschaltete Kanalabschnitte, die durch mehrere am Umfang des Stützkörpers 5 angeordnete Bohrungen gebildet sind. Von dort erstreckt sich der Luftkanal L durch einen Freiraum 4" zwischen Grundkörper 1 und Stützkörper 5. Die Lüftungsöffnungen 2' des Deckelteils 2 bilden ihrerseits Abschnitte des Luftkanals L des Handwerkzeuggetriebeverschlusses 10. Mit den Lüftungsöffnungen 2' des Deckelteils 2 endet der Luftkanal L.

Beispielhaft ist in Fig. 2 der Zustand gezeigt wenn der Getriebedruck DI den Umgebungsdruck DU übersteigt, d.h. im Getriebegehäuse 80 ein Überdruck herrscht. Dies ist beispielsweise der Fall, wenn das Schlagwerk (nicht gezeigt) ein im Getriebegehäuse 80 befindliches Schmiermittel erwärmt hat. Ein Druckausgleich erfolgt über die oleophobe Membran 9. Durch eine gestrichelte Linie ist eine Luftmasse LM dargestellt, die sich aufgrund des Getriebeinnendrucks DI, der größer als der Umgebungsdruck DU ist, in Pfeilrichtung durch den Luftkanal L Handwerkzeuggetriebeverschlusses 10 aus dem Getriebegehäuse 80 heraus bewegt. Dabei passiert die Luftmasse LM zunächst die Öffnungsbohrung 1".

Im in Fig. 2 gezeigten Ausführungsbeispiel weist der Handwerkzeuggetriebeverschluss 10 ein zweites luftdurchlässiges und getriebeöldichtes Abdichtelement 8 aufweist. Das zweite Abdichtelement 8 ist von der oleophoben Membran 9 in vertikaler Richtung beabstandet, im Luftkanal L angeordnet und koaxial zum Grundkörper 1 angeordnet. Das zweite Abdichtelement 8 besteht im vorliegenden Ausführungsbeispiel aus Filz und ist rotationssymmetrisch ausgebildet.

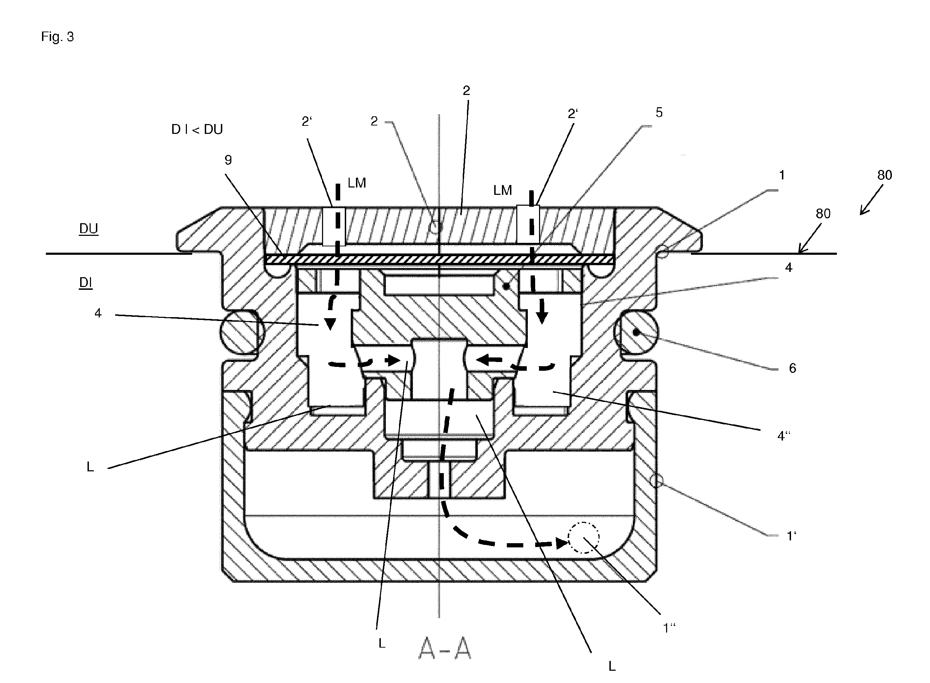

Fig. 3 zeigt nunmehr den Zustand wenn der Getriebeinnendruck DI niedriger als der Umgebungsdruck DU ist, d.h. im Getriebegehäuse 80 ein Unterdruck herrscht. Dafür ist in Fig. 3 exemplarisch mittels einer gestrichelten Linie eine Luftmasse LM dargestellt, die sich aufgrund des Getriebeinnendrucks DI, der kleiner als der Umgebungsdruck DU ist, in Pfeilrichtung durch den Luftkanal L Handwerkzeuggetriebeverschlusses 10 in das Getriebegehäuse 80 hinein bewegt. Dabei passiert die Luftmasse LM zunächst die Lüftungsöffnung 2". Im weiteren Verlauf kann die Luftmasse LM, entsprechend der Pfeilrichtung der gestrichelte Linie, durch die Öffnungsbohrung 1" des wannenförmigen Abschnitts 1' des Grundkörpers 1 in das Getriebegehäuse 80 eintreten.

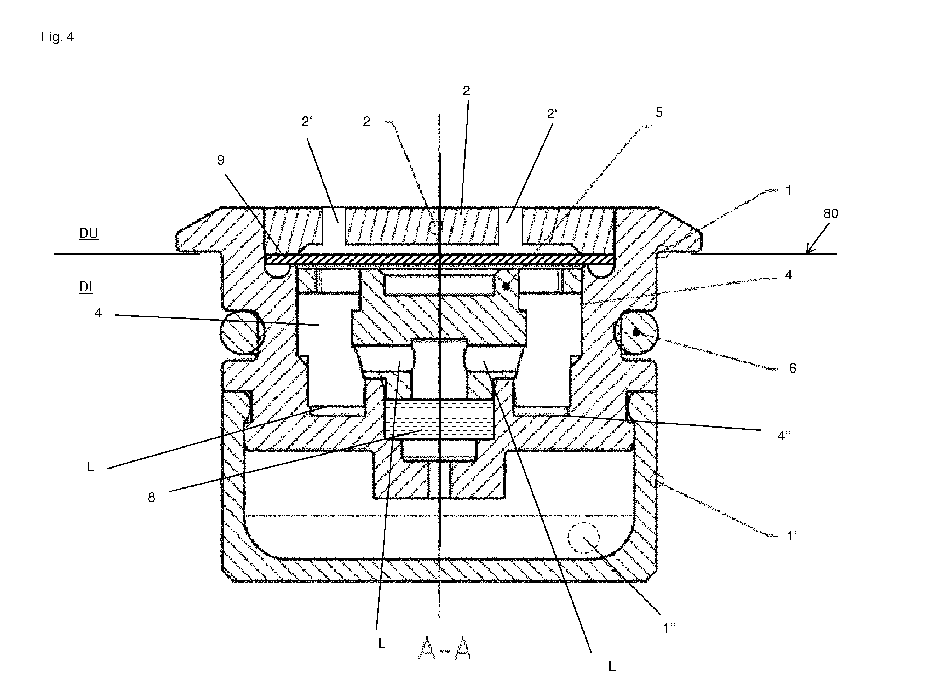

Im Ausführungsbeispiel der Fig. 4 ist ein Handwerkzeuggetriebeverschluss 10 dargestellt, der sowohl einen Stützkörper (vgl. Fig. 2) als auch ein zweites Abdichtelement 8 (vgl. Fig. 3) in Kombination aufweist.

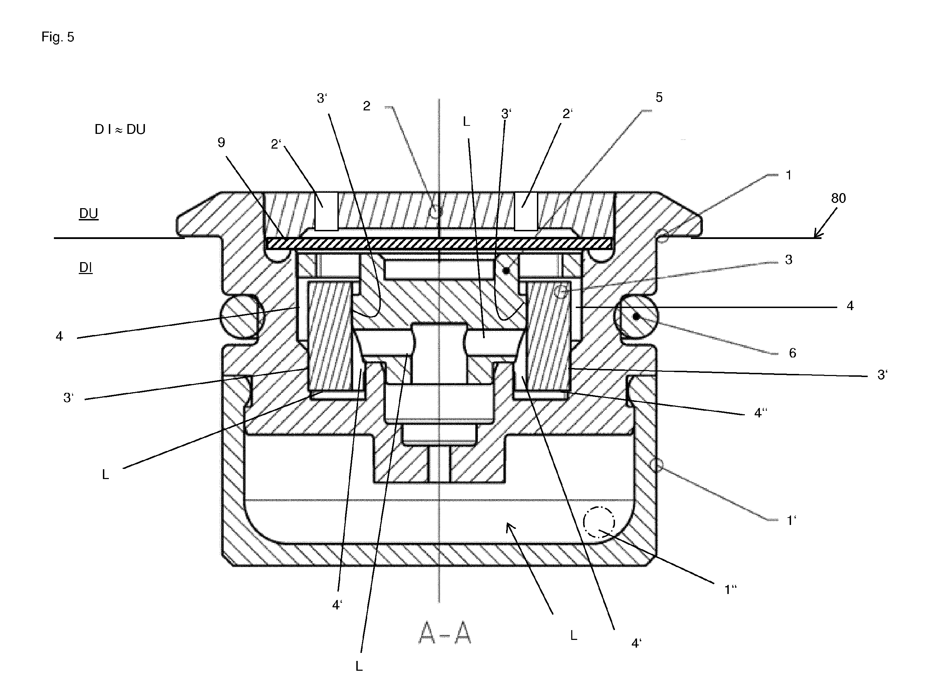

Fig. 5 zeigt eine schematische Darstellung des Handwerkzeuggetriebeverschluss 10 der Fig. 4, wobei in Fig. 5 zusätzlich ein im Luftkanal L des Handwerkzeuggetriebeverschlusses 10 ein bidirektionales Druckventil 3 als zweites Druckausgleichselement angeordnet ist, über das sowohl ein im Getriebegehäuse 80 auftretender Überdruck, d.h. DI > DU, als auch ein im Getriebegehäuse 80 auftretender Unterdruck, d.h. DI < DU abbaubar ist. In Fig. 5 ist der Zustand dargestellt, wenn Getriebeinnendruck DI und Umgebungsdruck DU im Wesentlichen gleich sind. Dies ist beispielsweise der Fall, wenn die Handwerkzeugmaschine längere Zeit nicht im Betrieb war oder während des Betriebs der Handwerkzeugmaschine, wenn ein Druckausgleich bereits erfolgt ist.

Vorliegend ist das Druckventil 3 innerhalb des Handwerkzeuggetriebeverschlusses 10 angeordnet und als elastisches Schlauchelement bestehend aus Silikon ausgebildet. Das als elastisches Schlauchelement ausgebildete Druckventil 3 ist koaxial zum rotationssymmetrisch ausgebildeten Grundkörper 1 des Handwerkzeuggetriebeverschlusses 10 angeordnet.

Der Handwerkzeuggetriebeverschluss 10 weist einen im Grundkörper 1 angeordneten Stützkörper 5 auf, wobei das als elastisches Schlauchelement ausgebildete Druckventil 3 sowohl gegen den Grundkörper 1 als auch gegen den Stützkörper 5 abgestützt ist.

Dabei ist das als elastisches Schlauchelement bereitgestellte Druckventil 3 an seinem inneren und äußeren Umfang jeweils nur teilweise abgestützt. Am inneren Umfang ist das als elastisches Schlauchelement bereitgestellte Druckventil 3 nur am Stützkörper 5 abgestützt, und zwar auf weniger als 50 Prozent seiner inneren Oberfläche. Am äußeren Umfang ist das als elastisches Schlauchelement bereitgestellte Druckventil 3 nur am Grundkörper 1 abgestützt, und zwar auf weniger als 50 Prozent seiner äußeren Oberfläche.

Somit wird für das als elastisches Schlauchelement ausgebildete Druckventil 3 an seinem äußeren Umfang eine Außenausweichzone 4 und an seinem inneren Umfang einen Innenausweichzone 4' gebildet. In die Außenausweichzone 4 bzw. in die Innenausweichzone 4' kann das elastisches Schlauchelement ausgebildete Druckventil 3 im Zuge eines Druckausgleichs ungehindert ausgelenkt werden. Stirnseitig ist das Schlauchelement auf seiner Unterseite, einen Teil des Luftkanals L bildend, von dem Grundkörper 1 beabstandet.

Die Außenausweichzone 4 verläuft umlaufend zum Stützkörper und ist sowohl bezüglich des Grundkörpers 1 als auch des Stützkörpers 5 koaxial angeordnet. Die Innenausweichzone 4' verläuft umlaufend zum Stützkörper und ist sowohl bezüglich des Grundkörpers 1 als auch des Stützkörpers 5 koaxial angeordnet. Die Außenausweichzone 4 ist ausschließlich durch einen Raum zwischen der Außenseite des Schlauchelements und dem Grundkörper 1 definiert, wohingegen die Innenausweichzone 4' durch einen Raum zwischen der Innenseite des Schlauchelements und des Stützkörpers 5 definiert ist. Dabei ist der Stützkörper 5 in seinem unteren Bereich konisch ausgebildet und definiert damit zumindest abschnittsweise die Innenausweichzone 4'.

In Fig. 6 ist eine Explosionsdarstellung des soeben mit Bezug auf Fig. 4 beschriebenen Handwerkzeuggetriebeverschlusses 10 dargestellt. Wie der Fig. 6 entnommen werden kann, sind der wannenförmige Abschnitt 1', der Dichtring 6, der Grundkörper 1, das als Filzelement bereitgestellte zweite Abdichtelement 8, der Stützkörper 5, die tellerförmig ausgebildete oleophobe Membran 9 sowie das Deckelteil 2 koaxial zueinander angeordnet.

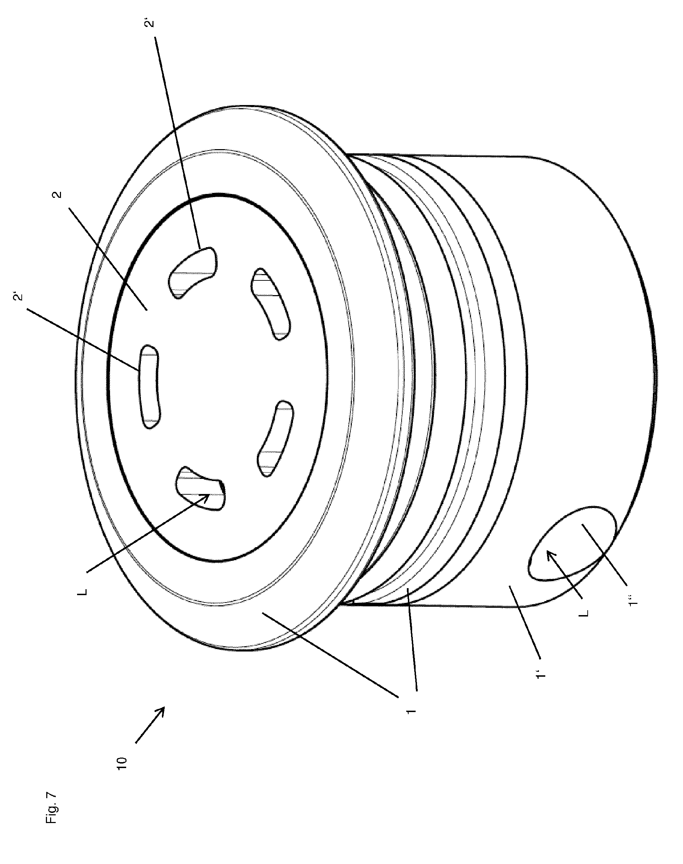

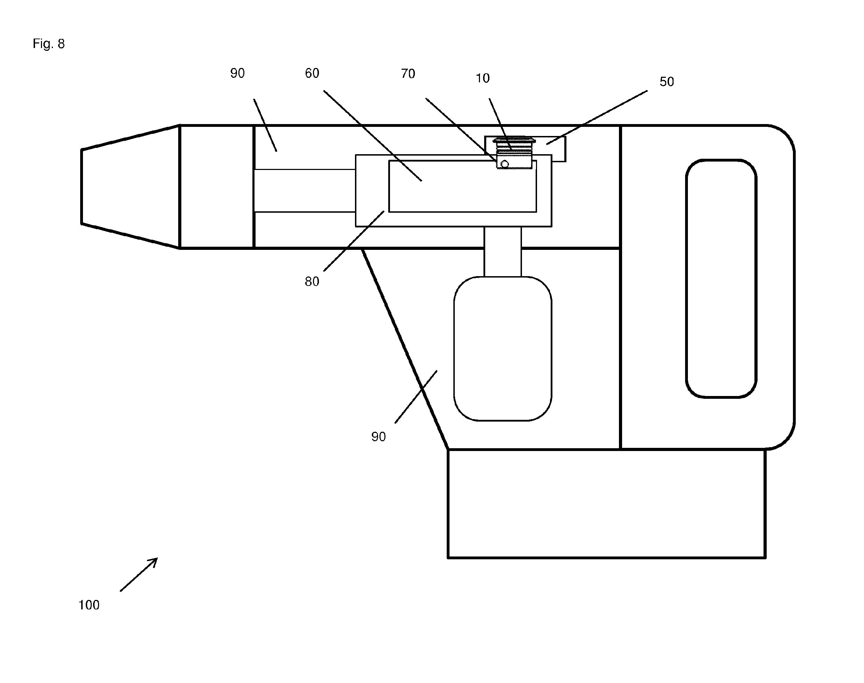

Fig. 7 zeigt den Handwerkzeuggetriebeverschluss 10 in einer schematischen und perspektivischen Darstellung. Gut erkennbar ist die rotationssymmetrische Ausbildung des Grundkörpers 1 mit seinem wannenförmigen Abschnitt 1', sowie die rotationssymmetrische Ausbildung des Deckelteils 2, an dessen Oberfläche ringförmig fünf Lüftungsöffnungen 2' angeordnet sind. Auf der im Einbauzustand einem Schlagwerk 60 (siehe Fig. 8) zugewandten Seite des wannenförmigen Abschnitts 1' des Grundkörpers 1 ist die Öffnungsbohrung 1" angeordnet, durch die eine Luftmasse LM in den Luftkanal L des Handwerkzeuggetriebeverschlusses 10 (im Falle eines Überdruckabbaus) eintreten bzw. (im Falle eines Unterdruckausgleichs) austreten kann.

Eine erfindungsgemäße Handwerkzeugmaschine 100 mit einem Handwerkzeuggetriebeverschluss 10 ist in Fig. 8 gezeigt. Die Handwerkzeugmaschine 100 weist ein Gehäuse 90 auf, das ein Getriebegehäuse 80 umschließt. Innerhalb des Getriebegehäuses 80 ist ein Schlagwerk 60 angeordnet, das im Zuge des Betriebs der Handwerkzeugmaschine 100 Wärme entwickelt. Auf der Oberseite des Getriebegehäuses 80 ist eine Getriebegehäuseöffnung 70 angeordnet, die vorliegend durch einen Handwerkzeuggetriebeverschluss 10 verschlossen ist. Der Handwerkzeuggetriebeverschluss 10 ist durch eine Schwingplatte 50 abgedeckt.

### Bezugszeichenliste

- DI: Getriebeinnendruck
- DU: Umgebungsdruck
- L: Luftkanal
- LM: Luftmasse
- 1: Grundkörper
- 1': wannenförmiger Abschnitt
- 1": Öffnungsbohrung
- 2: Deckelteil
- 2': Lüftungsöffnung
- 3: Druckventil
- 3': Ventilsitz
- 4: Außenausweichzone
- 4': Innenausweichzone
- 4": Freiraum
- 6: Dichtring
- 8: zweites Abdichtelement
- 9: oleophobe Membran
- 10: Handwerkzeuggetriebeverschluss
- 50: Schwingplatte
- 60: Schlagwerk
- 70: Getriebegehäuseöffnung
- 80: Getriebegehäuse
- 90: Werkzeuggehäuse
- 100: Handwerkzeugmaschine

## Patentansprüche

1. Handwerkzeuggetriebeverschluss (10) mit einem Grundkörper (1) zum Verschließen einer Getriebegehäuseöffnung (70) eines Getriebegehäuses (80) einer Handwerkzeugmaschine (100), insbesondere eines Bohrhammers oder Kombihammers, wobei der Handwerkzeuggetriebeverschluss (10) einen Luftkanal (L) aufweist, durch den eine Luftmasse (LM) in das und aus dem Getriebegehäuse (80) strömen kann,
**dadurch gekennzeichnet,**
**dass** der Handwerkzeuggetriebeverschluss (10) eine im Luftkanal (L) angeordnete oleophobe Membran (9) aufweist, die luftdurchlässig und getriebeöldicht ist und als Druckausgleichselement und Abdichtelement wirkt.

2. Handwerkzeuggetriebeverschluss (10) nach Anspruch 1,
**dadurch gekennzeichnet, dass** die oleophobe Membran (9) tellerförmig ausgebildet ist und koaxial zum Grundkörper (1) angeordnet ist.

3. Handwerkzeuggetriebeverschluss (10) nach einem der vorangehenden Ansprüche,
**dadurch gekennzeichnet, dass** der Handwerkzeuggetriebeverschluss (10) ein Deckelteil (2) mit Lüftungsöffnungen (2') aufweist, wobei die oleophobe Membran (9) durch das Deckelteil (2) gegen den Grundkörper (1) gehalten ist, wobei das Deckelteil (2) bevorzugt mittels eines Klebstoffs am Grundkörper (1) gesichert ist.

4. Handwerkzeuggetriebeverschluss (10) nach einem der vorangehenden Ansprüche,
**dadurch gekennzeichnet, dass** der Handwerkzeuggetriebeverschluss (10) ein zweites luftdurchlässiges und getriebeöldichtes Abdichtelement (8) aufweist, das, von der oleophobe Membran (9) beabstandet, im Luftkanal (L) angeordnet und bevorzugt koaxial zum Grundkörper (1) angeordnet ist.

5. Handwerkzeuggetriebeverschluss (10) nach Anspruch 4,
**dadurch gekennzeichnet, dass** das zweite Abdichtelement (8) aus Filz besteht oder wenigstens Filz aufweist.

6. Handwerkzeuggetriebeverschluss (10) nach einem der vorangehenden Ansprüche,
**dadurch gekennzeichnet, dass** der Handwerkzeuggetriebeverschluss (10) einen im Grundkörper (1) angeordneten Stützkörper (5) aufweist, der eine Auslenkung der oleophoben Membran (9) im Zuge eines Druckausgleichs beschränkt.

7. Handwerkzeuggetriebeverschluss (10) nach einem der vorangehenden Ansprüche,
**dadurch gekennzeichnet, dass** der Handwerkzeuggetriebeverschluss (10), als zweites Druckausgleichselement, ein im Luftkanal (L) angeordnetes bidirektionales Druckventil (3) aufweist, über das sowohl ein im Getriebegehäuse (80) auftretender Überdruck als auch ein im Getriebegehäuse (80) auftretender Unterdruck abbaubar ist.

8. Handwerkzeuggetriebeverschluss (10) nach einem der vorangehenden Ansprüche,
**dadurch gekennzeichnet, dass** der Grundkörper (1) einen Dichtring (6) aufweist, der angeordnet ist, den Grundkörper (1) umfangsseitig zur Getriebegehäuseöffnung (70) abzudichten.

9. Handwerkzeuggetriebeverschluss (10) nach einem der vorangehenden Ansprüche,
**dadurch gekennzeichnet, dass** der Grundkörper (1) als Stopfen ausgebildet ist.

10. Handwerkzeugmaschine (100), insbesondere Bohrhammer oder Kombihammer, mit einem vom einem Werkzeugehäuse (90) umschlossenen Getriebegehäuse (80), das über ein Getriebegehäuseöffnung (70) zugänglich ist,
**dadurch gekennzeichnet, dass** die Handwerkzeugmaschine (100) einen Handwerkzeuggetriebeverschluss (10) nach einem der vorangehende Ansprüche aufweist.
